# EUROPÄISCHE PATENTSCHRIFT

(11) **EP 2 611 837 B1**
(45) Veröffentlichungstag und Bekanntmachung des Hinweises auf die Patenterteilung: **15.03.2017**
(21) Anmeldenummer: 11754334.8
(22) Anmeldetag: 24.08.2011
(51) Int. Cl.: C08F 2/38, C08F 2/06, C08F 236/12, C08C 19/02

(54) **VERFAHREN ZUR HERSTELLUNG VON NITRILKAUTSCHUKEN IN ORGANISCHEN LÖSUNGSMITTELN**
METHOD FOR PRODUCING NITRILE RUBBERS IN ORGANIC SOLVENTS
PROCÉDÉ POUR PRODUIRE DES CAOUTCHOUCS NITRILES DANS DES SOLVANTS ORGANIQUES

(30) Priorität: 31.08.2010 EP 10174654
(43) Veröffentlichungstag der Anmeldung: 10.07.2013
(73) Patentinhaber: ARLANXEO Deutschland GmbH, 41540 Dormagen (DE)
(72) Erfinder: KLIMPEL, Michael, 53797 Lohmar (DE); BRANDAU, Sven, F-67000 Strasbourg (FR); WESTEPPE, Uwe, F-67610 La Wantzenau (FR); BARNER-KOWOLLIK, Christopher, 76297 Stutensee-Blankenloch (DE); KAISER, Andreas, FR-67000 Strasbourg (FR)
(74) Vertreter: Wichmann, Birgid
(86) Internationale Anmeldenummer: PCT/EP2011/064520
(87) Internationale Veröffentlichungsnummer: WO 2012/028503

(56) Entgegenhaltungen:
- EP-A1- 0 704 459
- EP-A1- 1 369 436
- WO-A1-2009/095315
- WO-A2-2008/142037
- C. HOLLBECK ET AL.: "OPTIMAL DESIGN OF FREE-RADICAL BATCH POLYMERIZATIONS WITH ONE CHARGE OF MONOMERS AND INITIATOR", DIE ANGEWANDTE MAKROMOLEKULARE CHEMIE, Bd. 242, Nr. 1, 1996, Seiten 47-64, XP002616114,
- JING Y ET AL: "POLAR, FUNCTIONALIZED DIENE-BASED MATERIALS.2.FREE RADICAL COPOLYMERIZATION STUDIES OF 2-CYANOMETHYL-1,3-BUTADIENE WITH STYRENE AND ACRYLONITRILE", MACROMOLECULES, AMERICAN CHEMICAL SOCIETY, US, Bd. 33, Nr. 17, 22. August 2000 (2000-08-22), Seiten 6262-6268, XP001050861, ISSN: 0024-9297, DOI: DOI:10.1021/MA0002287

## Beschreibung

Die vorliegende Erfindung betrifft ein Verfahren zur Herstellung von Nitrilkautschuken durch radikalische Polymerisation, das in Lösung und in Gegenwart spezieller Regler-Verbindungen durchgeführt wird, sowie ein Verfahren zur Hydrierung der dabei erhaltenen Nitrilkautschuke.

Unter Nitrilkautschuken, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

Großtechnisch werden Nitrilkautschuke fast ausschließlich durch sogenannte Emulsionspolymerisation hergestellt. Zur Regelung des Molekulargewichts und damit auch der Viskosität des entstehenden Nitrilkautschuks werden dabei üblicher Weise Dodecylmercaptane, insbesondere Tertiärdodecylmercaptane ("TDDM" oder auch "TDM" abgekürzt) eingesetzt. Nach der Polymerisation wird der erhaltene NBR-Latex in einem ersten Schritt koaguliert und daraus der NBR-Feststoff isoliert. Sofern eine weiterfuhrende Hydrierung des Nitrilkautschuks zum HNBR gewünscht ist, erfolgt diese Hydrierung ebenfalls nach bekannten Methoden des Standes der Technik, beispielsweise unter Einsatz homogener oder auch heterogener Hydrierkatalysatoren. Die Katalysatoren basieren üblicher Weise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden.

In großtechnischem Maßstab werden derartige Hydrierreaktionen von NBR zum HNBR üblicher Weise in homogener Phase, d.h. in einem organischen Lösungsmittel durchgeführt. Geeignete Katalysatoren und Lösungsmittel hierfür sind beispielsweise aus DE-A 25 39 132 und EP-A 0 471 250 bekannt. Insbesondere der sogenannte Wilkinson-Katalysator hat sich für eine selektive Hydrierung der Nitrilkautschuke in Monochlorbenzol als organischem Lösungsmittel bewährt. Um diese Hydrierung in einem organischem Medium durchzuführen, muss somit der nach der Polymerisation in wässriger Emulsion erhaltene Nitrilkautschuk zunächst isoliert werden. Dies ist verfahrenstechnisch und apparativ aufwändig und damit auch wirtschaftlich nicht uneingeschrankt attraktiv.

Hinzukommt, dass im Verlauf der Hydrierung von Nitrilkautschuken ein ganz erheblicher Anstieg der Viskosität (üblicher Weise um einen Faktor von 2 oder mehr) zu beobachten ist (der sogenannte Mooney-Sprung, in der Fachliteratur oft auch als Mooney Increase Ratio ("MIR") bezeichnet). Aus diesem Grund müssen Nitrilkautschuke unter Umständen vor der Hydrierung in einem weiteren Schritt einem Molekulargewichtsabbau (z.B. durch Metathese) unterzogen werden, um letztendlich einen hydrierten Nitrilkautschuk mit nicht zu hohem Molekulargewicht, respektive nicht zu hoher Viskosität erhalten zu können. Auf den bisher bekannten und großtechnisch umsetzbaren Synthesewegen sind auch den Möglichkeiten zur Beeinflussung der Polydispersität in gewissem Maß Grenzen gesetzt.

Es gab daher bereits verschiedenste Ansätze zur Optimierung der Herstellungsverfahren von NBR sowie HNBR. So wurde versucht, die Polymerisation zum Nitrilkautschuk in organischer Lösung durchzuführen. Diese Arbeiten waren jedoch bisher wenig Erfolg versprechend, und eine tatsächliche technische Umsetzung derartiger Verfahren ist bisher weder aus der Literatur noch aus der Praxis bekannt. In der Zusammenfassung der **Dissertation** von C. Hollbeck, Universität-Gesamthochschule Essen, 1995, Seite II, wird für die Copolymerisation von Acrylnitril und 1,3-Butadien in organischer Lösung folgendes festgestellt (Zitat): "Mit einem Zahlenmittel des Polymerisationsgrades Pn von 1589 (Molekulargewicht (Mn)= ∼85.800 g/mol) und einem Umsatz von 40,5% konnten die gesteckten Ziele bei einer Reaktionstemperatur von 343 K in 40 Stunden realisiert werden. Eine Zeitverkürzung auf 18 Stunden ließ sich nur unter Reduzierung des geforderten Umsatzes erreichen. Wie Testversuche zeigten, ist unter den gegebenen Bedingungen auch bei einer Erhöhung der Temperatur auf 353 K eine Kombination von Pn ≥ 1400 und Umsatz größer als 40% nicht im Bereich des Möglichen". Eine Beschrankung des erreichbaren Umsatzes auf gut 40 % innerhalb einer Reaktionszeit von 40 Stunden machen das dort beschriebene Verfahren der organischen Lösungspolymerisation für die Praxis technisch und wirtschaftlich untauglich. Vor dem oben geschilderten Hintergrund bestand die **Aufgabe der vorliegenden Erfindung** einer-seits darin, ein möglichst einfaches, Metall- und Emulgator-freies Verfahren zur Herstellung von optional hydrierten Nitrilkautschuken zur Verfugung zu stellen Zum anderen sollte gleichzeitig die Aufgabe gelöst werden, Nitrilkautschuke mit einer breiten Palette von Molekulargewichten und Polydispersitäten und im nächsten Schritt auch die entsprechenden hydrierten Nitrilkautschuke zugänglich zu machen.

**Überraschenderweise** wurde diese Aufgabe gelöst durch ein Verfahren gemäß Anspruch 1 zur Herstellung von Nitrilkautschuken mittels radikalischer Polymerisation in einem organischen Lösungsmittel unter Einsatz spezieller Molekulargewichtsregler.

Im Sinne dieser Anmeldung ist der Begriff "Nitrilkautschuk(e)" breit zu interpretieren und umfasst sowohl die Nitrilkautschuke als auch hydrierte Nitrilkautschuke. Sofern es sich um hydrierte Nitrilkautschuke handelt, bedeutet die Formulierung "Nitrilkautschuke enthaltend Wiederholungseinheiten abgeleitet von" somit, dass es sich bei den Wiederholungseinheiten, die auf das konjugierte Dien zurückgehen, um solche handelt, in denen die nach der Polymerisation im Polymer zunächst vorhandenen C=C Doppelbindungen ganz oder teilweise hydriert sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

**Gegenstand der Erfindung** ist ein **Verfahren zur Herstellung von Nitrilkautschuken**, bei dem man eine radikalische Polymerisation mindestens eines konjugierten Diens, mindestens eines α,β-ungesättigten Nitrils und gegebenenfalls eines oder mehrerer weiterer copolymerisierbarer Monomere in Gegenwart eines Initiators, mindestens eines organischen Lösungsmittels und mindestens eines Molekulargewichtsreglers durchführt, wobei der Molekulargewichtsregler ausgewählt ist aus der Gruppe bestehend aus
(i) Mercaptanen, die mindestens eine SH-Gruppe enthalten,
(ii) Mercaptoalkoholen, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfiden, Polysulfiden,
(vi) Thioharnstoff,
(vii) Allylverbindungen,
(viii) Aldehyden,
(ix) aliphatischen Halogenkohlenwasserstoffen, araliphatischen Halogenkohlenwasserstoffen und
(x) Saccharin sowie
(xi) beliebigen Mischungen von zwei oder mehr der vorgenannten Molekulargewichtsregler (i)-(x),
und dass das organische Lösungsmittel ein polares Lösungsmittel ist, welches einen Hildebrand'schen Lösungsparameter δ (δ = ((ΔHᵥRT)/Vₘ)^{1/2} [(MPa)^{1/2}]) (Vₘ = molares Volumen; ΔHᵥ = Verdampfungsenthalpie; R = ideale Gaskonstante)) in einem Bereich zwischen 15,5 und 26 (MPa)^{1/2} besitzt.

### Detaillierte Beschreibung

Dass eine radikalische Polymerisation zum Nitrilkautschuk mit technisch verwertbaren Molekulargewichten in industriell interessanten Polymerisationszeiten statt in Emulsion in organischer Lösung überhaupt möglich ist, war für einen Fachmann völlig unerwartet, da alle bisherigen Untersuchungen zur Lösungspolymerisation von NBR nicht zu vernünftigen Erfolgen geführt haben.

Das erfindungsgemäße Verfahrens erfolgt in Gegenwart mindestens eines organischen Lösungsmittels und mindestens eines Molekulargewichtsreglers. Zur Inititierung der Polymerisation wird ein Initiator eingesetzt.

An das erfindungsgemäße Verfahren kann sich optional eine Hydrierung anschließen.

Mit dem erfindungsgemäßen Verfahren gelingt es, in Zeiträumen, die denen der herkömmlichen Emulsionspolymerisation zur NBR-Herstellung vergleichbar sind, zu Umsätzen zu gelangen, die das Verfahren für eine großtechnische Umsetzung geeignet machen. Von Vorteil ist, dass der erhaltene Nitrilkautschuk vollkommen salz- und emulgatorfrei ist. Bei der über Jahrzehnte für die grosstechnische Durchführung üblichen Emulsionspolymerisation wird dagegen regelmäßig durch umfangreiche Wasch- und Aufarbeitungsgsaktionen versucht, zumindest eine Reduktion des Emulgator- und Salzgehalts zu erreichen.

Das erfindungsgemäße Verfahren wird in Gegenwart mindestens eines Molekulargewichtsreglers durchgeführt, der aus den Verbindungen (i) bis (xi) ausgewählt ist.

Bevorzugte **Mercaptane (i)** sind Alkylmercaptane, besonders bevorzugt sind C₁-C₁₆-Alkylmercaptane, die verzweigt oder unverzweigt sein können. Ganz besonders bevorzugt sind Methylmercaptan, Ethylmercaptan, n-Butylmercaptan, n-Hexylmercaptan, n-Octylmercaptan, n-Dodecylmercaptan und tert.-Dodecylmercaptane. Tert.-Dodecyl-mercaptane können sowohl in Form einzelner Isomere als auch in Form von Gemischen zweier oder mehr Isomere eingesetzt werden.

Bevorzugte **Mercaptoalkohole (ii)** sind aliphatische oder cycloaliphatische Mercaptoalkohole, insbesondere 2-Mercapto-1-ethanol, 3-Mercapto-1-propanol, 3-Mercaptopropan-1,2-diol (auch als Thioglycerin bekannt), 4-Mercapto-1-butanol und 2-Mercaptocyclohexanol.

Bevorzugte **Mercaptocarbonsäuren (iii)** sind Mercaptoessigsäure (auch als Sulfanylessigsäure bezeichnet), 3-Mercaptopropionsäure, Mercaptobutandisäure (auch als Mercaptobernsteinsäure bekannt), Cystein und N-Acetylcystein. Bevorzugte **Mercaptocarbonsäureester (iii)** sind Alkylthioglycolate, insbesondere Ethylhexylthioglycolat.

Eine bevorzugte **Thiocarbonsäure (iv)** ist Thioessigsäure.

Bevorzugte **Disulfide (v)** sind Xanthogendisulfide, besonders bevorzugt ist Diisopropylxanthogendisulfid.

Bevorzugte **Allylverbindungen (vii)** sind Allylalkohol oder Allylchlorid.

Ein bevorzugter **Aldehyd (viii)** ist Crotonaldehyd.

Bevorzugte **aliphatische oder araliphatische Halogenkohlenwasserstoffe** (ix) sind Chloroform, Tetrachlorkohlenstoff, Iodoform oder Benzylbromid.

Die vorgenannten Molekulargewichtsregler sind prinzipiell literaturbekannt (siehe K. C. Berger und G. Brandrup in J. Brandrup, E. H. Immergut, Polymer Handbook, 3. Aufl., John Wiley & Sons, New York, 1989, S. II/81 - II/141) und käuflich erhältlich oder können alternativ nach dem Fachmann aus der Literatur bekannten Verfahren hergestellt werden (siehe z.B. Chimie & Industrie, Vol 90 (1963), No 4, 358-368, US-A-2,531,602, DD 137 307, DD 160 222, US-A-3,137,735, WO-A-2005/082846, GB 823,824, GB 823,823, JP 07-316126, JP 07-316127, JP 07-316128).

Molekulargewichtsregler zeichnen sich dadurch aus, dass sie im Rahmen der Polymerisationsreaktion Kettenübertragungsreaktionen beschleunigen und damit die Herabsetzung des Polymerisationsgrades der resultierenden Polymeren bewirken. Die zuvor genannten Regler umfassen mono-, bi- oder polyfunktionale Regler, je nach Anzahl der funktionellen Gruppen im Molekül, die zu einer oder mehreren Kettenübertragungsreaktionen führen können.

Besonders bevorzugt handelt es sich bei dem im erfindungsgemäßen Verfahren einzusetzenden Molekulargewichtsregler um tert.-Dodecylmercaptane, sowohl in Form einzelner Isomere als auch in Form von Gemischen von zwei oder mehr Isomeren.

Tert.-Dodecymercaptane werden oft durch sauer katalysierte Addition von Schwefelwasserstoff an Olefine mit 12 Kohlenstoffen hergestellt. Als C₁₂-Olefin Ausgangsmaterial (auch als "C₁₂-Feed-stock" bezeichnet) werden überwiegend Oligomerengemische auf der Basis von tetramerisiertem Propen (auch "Tetrapropen" oder "Tetrapropylen" genannt), trimerisiertem Isobuten (auch "Triiso-buten" oder "Triisobutylen" genannt), trimerisiertem n-Buten und dimerisiertem Hexen verwendet.

Ganz besonders bevorzugt werden im erfindungsgemäßen Verfahren als Molekulargewichtsregler ein oder mehrere tert-Dodecylmercaptane ausgewählt aus der Gruppe bestehend aus 2,2,4,6,6-Pentamethylheptanthiol-4, 2,4,4,6,6-Pentamethylheptanthiol-2, 2,3,4,6,6-Pentamethylheptanthiol-2, 2,3,4,6,6-Pentamethylheptanthiol-3 und beliebigen Mischungen von zwei oder mehr der vorgenannten Isomere eingesetzt.

Insbesondere wird im erfindungsgemäßen Verfahren ein Gemisch eingesetzt, das 2,2,4,6,6-Pentamethylheptanthiol-4, 2,4,4,6,6-Pentamethylheptanthiol-2, 2,3,4,6,6-Pentamethylheptanthiol-2 und 2,3,4,6,6-Pentamethylheptanthiol-3 enthält. Die Herstellung dieses Gemischs ist in EP-A-2 162 430 beschrieben.
Üblicher Weise werden 1 bis 5000 mol% des Molekulargewichtsreglers bezogen auf 1 mol Initiator eingesetzt. Bevorzugt werden 5 bis 2000 mol% des Molekulargewichtsreglers bezogen auf 1 mol des Initiator eingesetzt.

### INITIATOREN:

Bei dem erfindungsgemäßen Verfahren handelt es sich um eine radikalische Polymerisation unter Einsatz mindestens eines Initiators.

Üblicher Weise wird der Initiator in einer Menge im Bereich von 10⁻⁴ bis 10⁻¹ mol/l, bevorzugt in einer Menge von 10⁻³ bis 10⁻² mol/l eingesetzt. Durch Abstimmung des Verhältnisses der eingesetzten Initiatormenge zur Menge des verwendeten Molekulargewichtsreglers gelingt es, sowohl die Reaktionskinetik als auch die Molekularstruktur (Molekulargewicht, Polydispersität) gezielt zu beeinflussen.

Als Initiatoren werden üblicher Weise peroxidische Initiatoren oder Azo-Initiatoren eingesetzt. Bevorzugt werden peroxidische Initiatoren oder Azo-Initiatoren eingesetzt, die eine verlängerte Zerfallszeit aufweisen. Es hat sich dabei bewährt, peroxidische Initiatoren oder Azo-Initiatoren einzusetzen, die bei einer Temperatur im Bereich von 70°C bis 200 °C, bevorzugt 80°C bis 175°C, besonders bevorzugt 85°C bis 160°C und insbesondere 85°C bis 150°C, in dem für die Polymerisation gewählten organischen Lösungsmittel eine Halbwertszeit von 10 Stunden oder mehr als 10 Stunden aufweisen.

Der Begriff der Halbwertszeit ist dem Fachmann im Zusammenhang mit Initiatoren geläufig. Nur als Beispiel: Eine Halbwertszeit von 10 Stunden in einem Lösungsmittel bei einer bestimmten Temperatur bedeutet konkret, dass sich unter diesen Bedingungen nach 10 Stunden die Hälfte des Initiators zersetzt hat.

Besonders bevorzugt werden Azoinitatoren der folgenden Strukturformeln (Ini-1)-(Ini-6) eingesetzt:

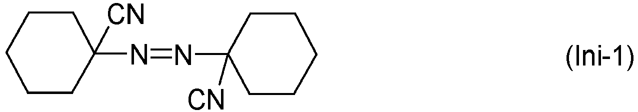

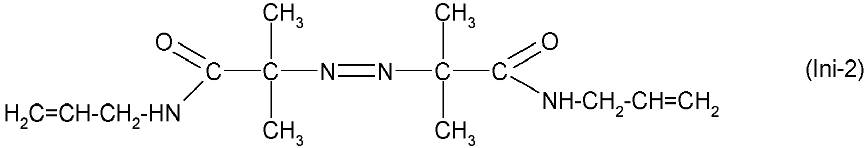

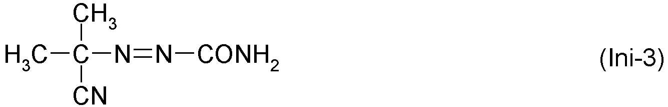

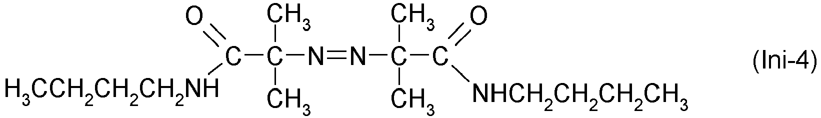

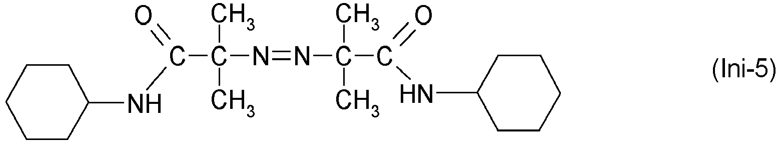

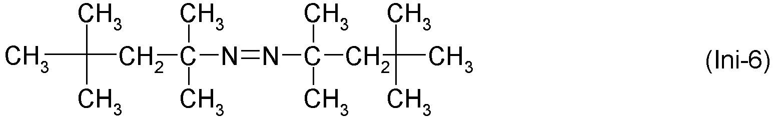

Bei den durch die Strukturformeln (Ini-1)-(Ini-6) dargestellten Initiatoren handelt es sich um 1,1'-Azobis(cyclohexan-1-carbonitril) (Ini-1), 2,2'-Azobis[N-(2-propenyl)-2-methylpropionamid] (Ini-2), 1-[(1-Cyano-1-methylethyl)azo]formamid (Ini-3), 2,2'-Azobis(N-butyl-2-methylpropionamid) (Ini-4), 2,2'-Azobis-(N-cyclohexyl-2-methylpropionamid) (Ini-5) und 2,2'-Azobis(2,4,4-trimethylpentan) (Ini-6).

Ganz besonders bevorzugt ist der Einsatz der Initiatoren der Formel (Ini-2) und (Ini-3). Die vorgenannten Azoinitiatoren der Strukturformeln (Ini-1)-(Ini-6) sind käuflich erhältlich, beispielsweise von Wako Pure Chemical Industries, Ltd..

Der Einsatz der speziellen Azoinitiatoren (Ini-1)-(Ini-6) hat sich besonders dann bewährt, wenn Nitrilkautschuke mit vergleichsweise höheren mittleren Molekulargewichten Mw (Gewichtsmittel des Molekulargewichts) und Mn (Zahlenmittel des Molekulargewichts) synthetisiert werden sollen.

Als **peroxidische Initiatoren** haben sich die folgenden Peroxo-Verbindungen, die eine -O-O-Einheit aufweisen, besonders bewährt, wenn sie die oben genannte Definition bezüglich der Halbwertszeit im gewählten organischen Lösungsmittel erfüllen: Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, 2,5-Dimethylhexan-2,5-di-t.butylperoxid, Bis-(t-butylperoxyisopropyl) benzol, t-Butylcumylperoxid, Di-t-butylperoxid, Dicumylperoxid, t-Butylperbenzoat, t-Butylperacetat, 2,5-Dimethylhexan-2,5-diperbenzoat, t-Butyl-per-3,5,5-trimethylhexanoat. Bevorzugt wird p-Menthanhydroperoxid, Cumolhydroperoxid oder Pinanhydroperoxid eingesetzt.

### LÖSUNGSMITTEL:

Das erfindungsgemäße Verfahren wird in mindestens einem organischen Lösungsmittel durchgeführt Große Mengen Wasser, wie im Fall der Emulsionspolymerisation sind somit nicht im Reaktions-system vorhanden. Geringere Mengen Wasser von bis zu 5 Gew.%, bevorzugt bis 1 Gew.% (bezogen auf die Menge des organischen Lösungsmittels) können durchaus im Reaktionssystem zugegen sein. Entscheidend ist, dass die Mengen anwesenden Wassers so gering gehalten werden muss, dass es nicht zu einer Ausfällung des sich bildenden NBR-Polymers kommt. Es sei klar gestellt, dass es sich bei dem erfindungsgemäßen Verfahren nicht um eine Emulsionspolymerisation handelt.

Als organische Lösungsmittel geeignet sind beispielsweise Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on und Methylethylketon. Erfindungsgemäß sind polare Lösungsmittel, welche einen Hildebrand'schen Lösungsparameter δ (δ = ((ΔHᵥ-RT)/Vₘ)^{½} [(MPa)^{½}]) (Vₘ = molares Volumen; ΔHᵥ = Verdampfungsenthalpie; R = ideale Gaskonstante)) in einem Bereich zwischen 15,5 und 26 (MPa)^{½} besitzen.

Ausschlaggebend für die Eignung eines Lösungsmittels ist, dass der hergestellte Nitrilkautschuk bei der Reaktionstemperatur, die sich üblicher Weise im unten angegebenen Bereich bewegt, vollständig in Lösung bleibt.

Ebenfalls möglich ist es, ein Gemisch von zwei oder mehr organischen Lösungsmitteln einzusetzen. Möglich ist es auch, Lösungsmittel einzusetzen, die den og. Anforderungen genügen und einen Siedepunkt besitzen, der unterhalb desjenigen von Acrylnitril liegt, wie z.B. Methyl-tert.butylether (MTBE).

### TEMPERATUR:

Das erfindungsgemäße Verfahren wird üblicher Weise bei einer Temperatur in einem Bereich von 60°C bis 150°C durchgeführt, bevorzugt in einem Bereich von 70°C bis 130°C, besonders bevorzugt in einem Bereich von 80°C bis 120°C und insbesondere in einem Bereich von 90°C bis 110°C. Wird die Temperatur noch tiefer gewählt, ist die Polymerisation entsprechend verlangsamt. Bei noch deutlich höheren Temperaturen ist es nicht ausgeschlossen, dass der eingesetzte Initiator zu schnell zerfällt und somit ein Polymer mit einem niedrigeren Molekulargewicht erhalten wird.

### UMSETZUNG:

Die Durchführung des erfindungsgemäßen Verfahrens erfolgt üblicher Weise so, dass das α,β-ungesättigte Nitril und die optional eingesetzten weiteren copolymerisierbaren Monomere, das Lösungsmittel, der Initiator sowie der/die Molekulargewichtsregler in einem Reaktionsgefäß vorgelegt werden und anschließend das oder die konjugierten Diene zudosiert wird/werden. Die Polymerisation wird im Anschluss durch Temperaturerhöhung gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren des jeweiligen Monomers, des Initiators, des Molekulargewichtsreglers oder von Lösungsmittel). Diese Nachdosierung kann für die einzelnen vor-genannten Substanzen kontinuierlich oder aber auch ein- oder mehrfach diskontinuierlich erfolgen.

Zur Einstellung eines geeigneten Molekulargewichts, des Umsatzes und des gewünschten PDIs hat es sich in einer Ausführungsform des erfindungsgemäßen Verfahrens bewährt, den Initiator oder den Regler und auch Lösungsmittel im Verlauf der Polymerisationsreaktion ein- oder mehrmals nachzudosieren.

### Nitrilkautschuke:

Gegenstand der Erfindung sind auch die Nitrilkautschuke, die durch das erfindungsgemäße Verfahren erhältlich und vollkommen salz- und emulgatorfrei sind.

Bereitgestellt werden durch das neue Polymerisationsverfahren Nitrilkautschuke, die gegebenenfalls hydriert sind, enthaltend Wiederholungseinheiten abgeleitet von mindestens einem konjugierten Dien, mindestens einem α,β-ungesättigten Nitril und gegebenenfalls einem oder mehreren weiteren copolymerisierbaren Monomeren.

Das konjugierte Dien im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien.

Als weitere copolymerisierbare Termonomere können beispielsweise aromatische Vinyl-monomere, bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpenta-fluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene**, wie 4-Cyanocyclohexen und 4-Vinylcyclohexen, oder auch **Alkine**, wie 1- oder 2-Butin.

Alternativ können als weitere copolymerisierbare Termonomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder um deren entsprechenden Anhydride oder Amide.

Als α**,β-ungesättigte Monocarbonsäuren** können bevorzugt Acrylsäure und Methacrylsäure eingesetzt werden.

Einsetzbar sind auch **Ester der α,β-ungesättigten Monocarbonsäuren**, bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxy-methylacrylat, Methoxyethyl(meth)acrylat, Ethoxyethyl(meth)acrylat und Methoxymethyl-(meth) acrylat. Einsetzbar sind auch Mischungen von Alkylestern, wie z.B. den vorgenannten, mit Alkoxy alkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylate, und Fluorobenzylmethacrylat. Einsetzbar sind auch Fluoroalkylgruppen haltige Acrylate und -Methacrylate, vorzugsweise Trifluoroethyl-acrylat und Tetrafluoropropylmethacrylat. Einsetzbar sind auch Aminogruppenhaltige αβ-ungesättigte Carbonsäureester wie Dimethylaminomethylacrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich beispielsweise handeln um **Alkyl**-, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl**-, bevorzugt C₂-C₁₂ Alkoxyalkyl-, besonders bevorzugt C₃-C₈- Alkoxyalkyl, **Hydroxyalkyl,** bevorzugt C₁-C₁₂ Hydroxyalkyl-, besonders bevorzugt C₂-C₈-Hydroxyalkyl, **Cycloalkyl**-, bevorzugt C₅-C₁₂-Cycloalkyl-, besonders bevorzugt C₆-C₁₂-Cycloalkyl, **Alkylcycloalkyl**-, bevorzugt C₆-C₁₂-Alkylcycloalkyl-, besonders bevorzugt C₇-C₁₀-Alkylcycloalkyl, Aryl-, bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der α,β-ungesättigten Monocarbonsäuren** sind Hydroxyethyl(meth)acrylat, Hydroxypropyl-(meth)acrylat und Hydroxybutyl(meth)acrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei oder mehrfach ungesättigter Verbindungen sind zwei- oder mehrfach ungesättigte Acrylate, Methacrylate oder Itaconate von Polyolen wie z.B. 1,6-Hexandioldiacrylat (HDODA), 1,6-Hexandioldimethacrylat, Ethylenglykoldiacrylat, Ethylenglykoldimethacrylat (EGDMA), Diethylenglykoldimethacrylat, Triethylenglykoldiacrylat, Butandiol-1,4-diacrylat, Propandiol-1,2-diacrylat, Butandiol-1,3-dimethacrylat, Neopentyl-glykoldiacrylat, Trimethylolpropandiacrylat, Trimethylolpropandimethacrylat, Trimethylol-ethandiacrylat, Trimethylolethandimethacrylat, Trimethylolpropantriacrylat, Trimethylolpropan-trimethacrylat (TMPTMA), Glycerindi- und -triacrylat, Pentaerythritdi-, -tri- und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykol-divinylether, Diallylphthalat, Allylmethacrylat, Diallylmaleat, Triallylisocyanurat oder Triallylphosphat.

Bei Einsatz solcher Termonomere gelingt es vorteilhaft, die Polymerisation bis zu hohen Umsätzen zu führen und dabei Nitrilkautschuke herzustellen, die ein vergleichsweise höheres mittleres Molekulargewicht M_{w} (Gewichtsmittel) bzw. Mₙ (Zahlenmittel) besitzen, jedoch trotzdem gelfrei sind.

Die Anteile an konjugiertem Dien und α,β-ungesättigtem Nitril in den erhaltenen NBR-Polymeren können in weiten Bereichen schwanken. Der Anteil des oder der Summe der konjugierten Diene liegt üblicher Weise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicher Weise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Soweit es sich bei den Termonomeren um solche Monomere handelt, die tertiäre Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40 Gew.-% nur für die Konstellation gilt, dass die Gesamtmenge an Monomeren dem Polymerisationsansatz zu Beginn bzw. während der Reaktion zudosiert werden (also zur Erzeugung statistischer Terpolymersysteme).

Die **Glastemperaturen** der erfindungsgemäß herstellbaren optional hydrierten Nitrilkautschuke liegen im Bereich von -70°C bis +20°C, vorzugsweise im Bereich -60°C bis 10°.

Das erfindungsgemäße Verfahren erlaubt durch Steuerung der Reglerkonzentration eine sehr genaue Einstellung des gewünschten Molekulargewichts und gezielter Molekulargewichtsverteilungen von engen bis hin zu breiten Verteilungen, von mono- über bi- bis hin zu multimodalen Verteilungen.

Die eingesetzten Nitrilkautschuke besitzen einen Polydispersitätsindex PDI = Mw/Mn, wobei Mw das Gewichtsmittel und Mn das Zahlenmittel des Molekulargewichts darstellt, im Bereich von 1,5 - 6,0 und bevorzugt im Bereich von 1,7 - 5,0.

### Hydrierung:

Ein weiterer Gegenstand der vorliegenden Erfindung besteht in der Bereitstellung von hydrierten Nitrilkautschuken, indem sich an den ersten Polymerisationsschritt unmittelbar eine Hydrierung anschließt, wobei keine vorhergehende Isolierung des Nitrilkautschuks nötig ist wie bei der bisher im Stand der Technik eingesetzen NBR Emulsionspolymerisation. Die Hydrierung kann, sofern gewünscht sogar im gleichen Reaktor durchgeführt werden. Dies führt zu einer substantiellen Vereinfachung und damit zu wirtschaftlichen Vorteilen bei der Herstellung des HNBR.

Die Hydrierung kann unter Einsatz homogener oder heterogener Hydrierkatalysatoren durchgeführt werden. Die eingesetzten Katalysatoren basieren üblicher Weise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.**B.**US-A-3,700,637**,** DE-A-25 39 132**,** EP-A-0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicher Weise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinläng-lich bekannt. Sie erfolgt üblicher Weise, indem man den zu hydrierenden Nitrilkautschuk in einem Lösungsmittel wie Toluol oder Monochlorbenzol bei einer Temperatur im Bereich von 100°C bis 150°C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, insbesondere 90-100% verstanden.

Bei Einsatz heterogener Katalysatoren handelt es sich üblicher Weise um geträgerte Katalysatoren auf der Basis von Palladium, die z. B. auf Kohle, Kieselsäure, Calciumcarbonat oder Bariumsulfat geträgert sind.

Aufgrund der guten Möglichkeit, durch den eingesetzten Regler das Molekulargewicht des entstehenden Polymers zu steuern, ist es insbesondere möglich, NBR-Typen (und entsprechend bei nachgelagerter zusätzlicher Hydrierung auch HNBR-Typen) mit niedrigem Molekulargewicht und niedriger Mooney Viskosität herzustellen, ohne dass es im Fall des HNBR vor der Hydrierung zwingend einem gezielten Abbau des Molekulargewichts (z.B. durch Mastikation, chemischen Abbau oder Metathese) in einem weiteren Verfahrensschritt bedarf. Sofern gewünscht, kann natürlich ein solcher zusätzlicher Molekulargewichtsabbau erfolgen, insbesondere durch die dem Fachmann beispielsweise aus der WO-A-02/100941 sowie der WO-A-02/100905 bekannte Metathese.

Sowohl die erfindungsgemäß erhältlichen Nitrilkautschuke als auch die entsprechenden hydrierten Nitrilkautschuke zeichnen sich gegenüber den optional hydrierten Nitrilkautschuken, bei denen der Nitrilkautschuk durch Emulsionspolymerisation erhalten wird, dadurch aus, dass sie vollständig Emulgator-frei sind und keine Salze enthalten, wie sie üblicher Weise zur Koagulation der Latices nach der Emulsionspolymerisation zwecks Ausfällung des Nitrilkautschukes eingesetzt werden.

Die erfindungsgemäßen Nitrilkautschuke sowie entsprechenden hydrierten Nitrilkautschuke können ferner zur Herstellung von **vulkanisierbaren Mischungen** eingesetzt werden. Diese vulkanisierbaren Mischungen enthalten den erfindungsgemäß hergestellten optional hydrierten Nitrilkautschuk und mindestens einen Vernetzer sowie optional zusätzlich mindestens einen Füllstoff enthalten.

Optional können derartige vulkanisierbare Mischungen auch noch ein oder mehrere dem Fachmann für Kautschuke geläufige Additive enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert.Butyl peroxynonylvalerat, Dicumylperoxid, 2,5-Dimethyl-2,5-di(t-butylperoxy)hexan, tert-Butylcumylperoxid, 1,3-Bis(t-butylperoxyisopropyl)-benzol, Di-t-butylperoxid und 2,5-Dimethyl-2,5-di(t-butylperoxy)hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropan-trimethacrylat, Zinkacrylat, Zinkdiacrylat, Zinkmethacrylat, Zinkdimethacrylat, 1,2-Polybutadien oder N,N'-m-Phenylendimaleinimid geeignet.

Die Gesamtmenge des oder der Vernetzer liegt üblicher Weise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen optional hydrierten Nitrilkautschuk aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),
Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylenthiocarbamyl-N-tert.butylsulfenamidund Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid.

Als Caprolactam kann beispielsweise Dithiobiscaprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobis-caprolactam

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei einer Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäß erhältlichen optional hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr AminoGruppen enthält (ggf. auch in Salz-Form) oder (2) um eine Spezies, die während der Vernetzungsreaktion in-situ eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=O)NHNH₂")

Beispiele für derartige Polyamin-Vernetzer (ii) sind:
- Aliphatische Polyamine, bevorzugt Hexamethylendiamin, Hexamethylendiamin carbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl)propan, 4,4'-Methylendianilin, m-Phenylendiamin, p-Phenylendiamin oder 4,4'-Methylen-bis(o-chloroanilin);
- Verbindungen mit mindestens zwei Hydrazid-Strukturen, bevorzugt Isophthalsäuredihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.Teile des optional hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydeamin-Vernetzungsbeschleuniger wie z.B. n-Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Sofern es sich bei den erfindungsgemäß erhältlichen optional hydrierten Nitrilkautschuken um solche handeln, die Wiederholungseinheiten eines oder mehrerer hydroxylgruppenhaltiger Termonomere beinhalten, so kann ein Vernetzung auch durch Einsatz eines Isocyanat-Vernetzers, der mindestens zwei Isocyanatgruppen beinhaltet, erfolgen, bevorzugt in zusätzlicher Gegenwart eines Vernetzungsbeschleunigers.

Als Vernetzer für den optional hydrierten Nitrilkautschuk wird dann ein dimeres, trimeres, oligomeres oder polymeres Di- oder Polyisocyanat eingesetzt. Die Formulierung "Di- oder Polyisocyanat" steht dabei dafür, dass der Vernetzer zwei oder mehr freie oder gegebenenfalls auch blockierte Isocyanatgruppen im Molekül aufweist, "dimer, trimer, oligomer oder polymer" steht dabei dafür, dass der Vernetzer aus einer entsprechenden Anzahl von zwei, drei oder mehr monomeren Mono-, Di- oder Polyisocyanaten aufgebaut ist.

Besonders bevorzugt ist die Verwendung von Vernetzern auf Basis von dimeren oder trimeren Diisocyanaten, welche Allophanat-, Biuret-, Uretdion-, Uretonimin-, verbrückte Carbamat-, Carbodiimid-, Oxadiazintrion-, Isocyanurat- oder Iminooxadiazindion-Strukturelemente aufweisen sowie zwei oder mehr freie Isocyanatgruppen im Molekül. Diese können auch als oligomere oder polymere Allophanate, Biurete, Uretdione, Uretonimine, verbrückte Carbamate, Carbodiimide, Isocyanurate, Oxadiazintrione oder Iminooxadiazindione vorliegen, d. h. dass die einzelnen Ringe sind dann zu einem Oligomer oder Polymer verbunden sind. Eine entsprechende Oligomer- oder Polymerbildung tritt insbesondere dann auf, wenn als monomere Isocyanate di- oder polyfunktionelle Isocyanate verwendet werden.

Grundsätzlich ist es möglich, dass der Vernetzer auf einem einzigen Typ eines monomeren, oligomeren oder polymeren Di- oder Polyisocyanats basiert. Es ist aber auch möglich, dass die genannten Strukturelemente durch eine Reaktion verschiedener monomerer, oligomerer oder polymerer Di- oder Polyisocyanate zustande kommen.

Geeignete Beispiele für cyclische Vernetzer auf Basis von monomeren Diisocyanaten, die einen aliphatischen oder cycloaliphatischen Rest aufweisen, sind dem Fachmann an sich bekannt und umfassen z.B. Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentylcyclohexan und Hexamethylen-1,6-diisocyanat.

Die Menge des Vernetzers der mindestens zwei Isocyanatgruppen enthält, liegt üblicher Weise im Bereich von 0,2 bis 25 phr, bevorzugt von 1 bis 20 phr, besonders bevorzugt im Bereich von 1,5 bis 15 phr und insbesondere im Bereich von 2 bis 10 phr, bezogen auf den Hydroxylgruppen-haltigen optional hydrierten Nitrilkautschuk.

Die vulkanisierbare Mischung basierend auf dem erfindungsgemäß erhältlichen optional hydrierten Nitrilkautschuk kann prinzipiell auch Anvulkanisationsverzögerer enthalten. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäß erhältliche optional hydrierte Nitrilkautschuk auch mit weiteren üblichen Kautschukadditiven gemischt werden.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicher Weise 0 bis 10 phr, bezogen auf 100 phr des optional hydrierten Nitrilkautschuks.

Als **Alterungsschutzmittel** können den vulkanisierbaren Mischungen aus der Literatur bekannte Alterungsschutzmittel zugesetzt werden. Sie werden üblicher Weise in Mengen im Bereich von ca. 0 bis 10 phr, bevorzugt 0,25 bis 7,5 phr, besonders bevorzugt 0,5 bis 5 phr bezogen auf 100 phr des optional hydrierten Nitrilkautschuks eingesetzt.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-*p*-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Nitrilkautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-a-Naphthylamin (PAN), Phenyl-í-Naphthylamin (PBN), vorzugsweise solche auf Phenylendiaminbasis eingesetzt. Beispiele für Phenylendiamine sind *N-*Isopropyl-*N'*-phenyl-*p*-Phenylendiamin, *N-*1,3-Dimethylbutyl-*N'*-Phenyl-*p*-Phenylendiamin (6PPD), *N*-1,4-Dimethylpentyl-*N'*-phenyl-*p*-Phenylendiamin (7PPD), *N,N'*-bis-1,4-(1,4-Dimethylpentyl)-*p-*Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem dann verwendet, wenn peroxidisch vulkanisiert wird.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Auf Basis der vulkanisierbaren Mischungen können Vulkanisate hergestellt werden, indem man die zuvor genannte vulkanisierbare Mischung einer Vernetzung unterzieht. Die Vernetzung wird typischerweise entweder durch mindestens einen Vernetzer oder aber durch photochemische Aktivierung herbeigeführt.

Im Fall der **photochemisch aktivierten Vulkanisation** können als UV-Aktivatoren die dem Fachmann üblicher Weise bekannten eingesetzt werden, beispielsweise Benzophenon, 2-Methylbenzophenon, 3,4-Dimethylbenzophenon, 3-Methylbenzophenon, 4,4'-Bis(diethylamino) benzophenon, 4,4'-Di-hydroxybenzophenon, 4,4'-Bis[2-(1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

Üblicher Weise erfolgt die Vulkanisation im Rahmen eines formgebenden Verfahrens, bevorzugt unter Anwendung eines Spritzgussverfahrens. Hierbei können eine Vielzahl von Formteile erhalten werden, z.B. Dichtungen, Kappen, Schläuche oder Membranen. Herstellbar sind z.B. O-Ringdichtungen, Flachdichtungen, Wellendichtringe, Dichtmanschetten, Dichtkappen, Staubschutzkappen, Steckerdichtungen, Thermoisolierschläuche (mit und ohne PVC-Zusatz), Ölkühlerschläuche, Luftansaugschläuche, Servolenkschläuche oder Pumpenmembranen.

### BEISPIELE

### Molekulargewichte sowie Polydispersitätsindex:

Die Bestimmung der Molekulargewichte in Form des Zahlenmittels des Molekulargewichts (Mₙ) und des Gewichtsmittels des Molekulargewichts (M_{w}) sowie des Polydispersitätsindex erfolgte mittels Gelpermeations-Chromatographie (GPC) nach DIN 55672-1 (Teil 1: Tetrahydrofuran THF als Lösungsmittel)

### Acrylnitrilgehalt:

Der Stickstoffgehalt zur Bestimmung des Acrylnitrilgehalts wurde in den erfindungsgemäßen Nitrilkautschuken gemäß DIN 53 625 nach Kjeldahl bestimmt.

### Gelgehalt:

Die Bestimmung der unlöslichen Anteile (der sogenannten "Gelgehalte") erfolgte nach 22 stündigem Lösen einer Probe bei Raumtemperatur in Methylethylketon (MEK) als Lösungsmittel und einer Konzentration des Polymers von 10g/L and anschließender einstündiger Ultrazentrifugation mit 20.000 UpM bei 25 °C.

Folgende Substanzen werden im Rahmen der folgenden Beispiele eingesetzt:
- TDM: tert. Dodecylmercaptan (Lanxess Deutschland GmbH; Herstellung auch in WO-A-2008/142037 beschrieben)
- VAm^{®} 110: 1,1'-Azobis(N-butyl-2-methylpropionamid) (Initiator, erhältlich von Wako Pure Chemical Industries Ltd.)
- V30^{®}: 1-[(1-Cyano-1-methylethyl)azo]formamid (Initiator erhältlich von Wako Pure Chemical Industries Ltd.)
- Vulkanox BKF^{®}: 2-[(2-Hydroxy-5-methyl-3-tert-butyl-phenyl)methyl]-4-methyl-6-tert-butylphenol (Stabilisator der Lanxess Deutschland GmbH)

### Beispiele 1 und 2:

27,2 g (87 mmol entsprechend 0,375 phm) Vam 110 und 14,5 g (entsprechend 0,2 phm) TDM wurde in 10282 g (entsprechend 142 phm) Monochlorbenzol gelöst, 2708 g Acrylnitril (51,0 mol entsprechend 37 phm) zugesetzt und für 10 Minuten mit Stickstoff entgast. Die Monomer-/Initiator-lösung wurde in den Reaktor überführt, dieser verschlossen und durch dreimaliges Evakuieren/Spülen mit Stickstoff sauerstofffrei gemacht. 4551 g 1,3-Butadien (84,3 mol entsprech-end 63 phm) wurden unter einem Druck von 3 bar zudosiert und die Reaktion durch Erhitzen auf 100 °C gestartet. Das Erreichen dieser Temperatur stellte den Polymerisationsbeginn dar. Der Polymerisationsverlauf wurde durch gravimetrische Umsatzbestimmungen mittels zwischenzeitlicher Probenentnahme verfolgt. Nach einer Polymerisationszeit von 23 Stunden wurde der Reaktor auf 25 °C abgekühlt, überschüssiges 1,3-Butadien und Monomere nach Abkühlen des Reaktors durch Destillation im Vakuum entfernt und das Polymer mit 0,2 phm mit Vulkanox BKF als Stabilisator versetzt. Das Lösungsmittel wurde anschließend im Hochvakuum entfernt. Es wurde ein Umsatz von 38 % erreicht.

Die Polymerisation des Beispiels 2 wurde analog durchgeführt unter Variation des Initiators und des Lösungsmittels (siehe Tabelle 1). Soweit die Polymerisationsbedingungen von denen in Beispiel 1 abwichen, ist dies ebenfalls in Tabelle 1 aufgeführt.

**Tabelle 1: Beispiele 1-2 (erfindungsgemäß), Rezepturen und Polymerisationsbedingungen**

| | | **NBR1** | **NBR2** |
|---|---|---|---|
| **Rezeptur:** | | | |
| **Acrylnitril** | **phm** | 37 | 37 |
| **Butadien** | **phm** | 63 | 63 |
| **Chlorbenzol** | **phm** | 142 | - |
| **1,4-Dioxan** | **phm** | - | 169 |
| **VAm^{®} 110** | **phm** | 0,37 | - |
| **V30^{®}** | **phm** | - | 0,21 |
| **Vulkanox BKF^{®}** | **phm** | 0,2 | 0,2 |

| **Reaktionsbedingungen:** | | | |
|---|---|---|---|
| **Polymerisations-temperatur** | **°C** | 100 | 100 |
| **Polymerisationszeit** | **h** | 23 | 23 |
| **Endumsatz** | **%** | 38 | 42 |

**Tabelle 2: Analytische Ergebnisse**

| **Bezeichnung:** | | **NBR1** | **NBR2** |
|---|---|---|---|
| **GPC-Ergebnisse:** | | | |
| Mn | g/mol | 91601 | 87920 |
| Mw | g/mol | 291953 | 304485 |
| Polydispersität | | 3,2 | 3,5 |
| gebundenes Acrylnitril | % | 33,7 | 32,7 |

| **Gelmessung:** | | | |
|---|---|---|---|
| Gelgehalt | % | 0,5 | 0,4 |

| **Mikrostruktur** **(1H NMR):** | | | |
|---|---|---|---|
| ACN | % | 34,0 | - |
| 1,4 BD | % | 56,0 | - |
| 1,2 vinyl BD | % | 10,0 | - |

## Patentansprüche

1. Verfahren zur Herstellung von Nitrilkautschuken durch radikalische Polymerisation mindestens eines konjugierten Diens, mindestens eines α,β-ungesättigten Nitrils und gegebenenfalls eines oder mehrerer weiterer copolymerisierbarer Monomere in Gegenwart eines Initiators, mindestens eines organischen Lösungsmittels und mindestens eines Molekulargewichtsreglers, **dadurch gekennzeichnet, dass** der Molekulargewichtsregler ausgewählt ist aus der Gruppe bestehend aus
(i) Mercaptanen, die mindestens eine SH-Gruppe enthalten,
(ii) Mercaptoalkoholen, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfiden, Polysulfiden,
(vi) Thioharnstoff,
(vii) Allylverbindungen,
(viii) Aldehyden,
(ix) aliphatischen Halogenkohlenwasserstoffen, araliphatischen Halogenkohlen-wasserstoffen,
(x) Saccharin und
(xi) beliebigen Mischungen von zwei oder mehr der Molekulargewichtsregler (i)-(x),
und dass das organische Lösungsmittel ein polares Lösungsmittel ist, welches einen Hildebrand'schen Lösungsparameter δ (δ = ((ΔHᵥRT)/Vₘ)^{1/2} [(MPa)^{1/2}]) (Vₘ = molares Volumen; ΔHᵥ = Verdampfungsenthalpie; R = ideale Gaskonstante)) in einem Bereich zwischen 15,5 und 26 (MPa)^{1/2} besitzt.

2. Verfahren nach Anspruch 1, wobei sich an die radikalische Polymerisation eine Hydrierung anschließt.

3. Verfahren nach Anspruch 1 oder 2, wobei der Molekulargewichtsregler ausgewählt ist aus der Gruppe bestehend aus
(i) Alkylmercaptanen, bevorzugt C₁-C₁₆ Alkylmercaptanen, insbesondere Methylmercaptan, Ethylmercaptan, n-Butylmercaptan, n-Hexylmercaptan, n-Octylmercaptan, n-Dodecylmercaptan und tert.-Dodecyl-mercaptanen,
(ii) aliphatischen Mercapatoalkoholen und cycloaliphatischen Mercaptoalkoholen, bevorzugt 2-Mercapto-1-ethanol, 3-Mercapto-1-propanol, 3-Mercaptopropan-1,2-diol, 4-Mercapto-1-butanol und 2-Mercaptocyclohexanol,
(iii) Mercaptoessigsäure, 3-Mercaptopropionsäure, Mercaptobutandisäure, Cystein, N-Acetylcystein und Alkylthioglycolate, insbesondere Ethylhexylthioglycolat,
(iv) Thioessigsäure,
(v) Xanthogendisulfide, bevorzugt Diisopropylxanthogendisulfid,
(vi) Thioharnstoff
(vii) Allylalkohol, Allylchlorid,
(viii) Crotonaldehyd,
(ix) Chloroform, Tetrachlorkohlenstoff, Iodoform, Benzylbromid und
(x) Saccharin.
(xi) beliebigen Mischungen von zwei oder mehr der Molekulargewichtsregler (i)-(x).

4. Verfahren nach Anspruch 1 oder 2, wobei als Molekulargewichtsregler ein Gemisch aus 2,2,4,6,6-Pentamethylheptanthiol-4, 2,4,4,6,6-Pentamethylheptanthiol-2, 2,3,4,6,6-Pentamethylheptanthiol-2 und 2,3,4,6,6-Pentamethylheptanthiol-3 eingesetzt wird.

5. Verfahren nach Anspruch 1 oder 2, wobei 1 bis 5000 mol%, bevorzugt 5 bis 2000 mol% des Molekulargewichtsreglers bezogen auf 1 mol des Initiators eingesetzt werden.

6. Verfahren nach Anspruch 1 oder 2, wobei der Initiator in einer Menge im Bereich von 10⁻⁴ bis 10⁻¹ mol/l, bevorzugt in einer Menge von 10⁻³ bis 10⁻² mol/l eingesetzt wird.

7. Verfahren nach Anspruch 1 oder 2, wobei die Polymerisation in Gegenwart mindestens eines peroxidischen Initiators oder mindestens ein Azo-Initiators durchgeführt wird, der bei einer Temperatur von 70°C bis 200°C, bevorzugt 80°C bis 175°C, besonders bevorzugt 85°C bis 160°C und insbesondere 85°C bis 150°C, in dem organischen Lösungsmittel eine Halbwertszeit von 10 Stunden oder mehr als 10 Stunden aufweisen

8. Verfahren nach Anspruch 1 oder 2, wobei die Polymerisation in Gegenwart eines Azoinitators der Strukturformeln (Ini-1) bis (Ini-6) durchgeführt wird.

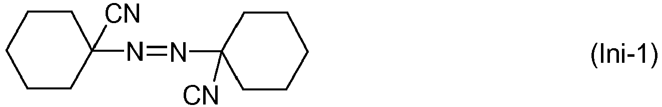

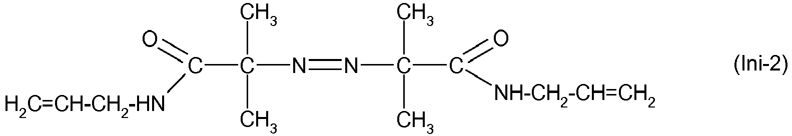

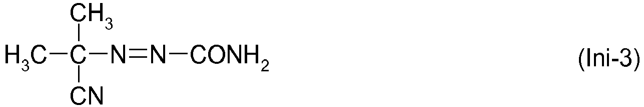

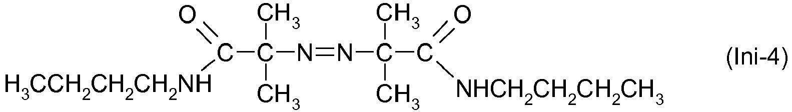

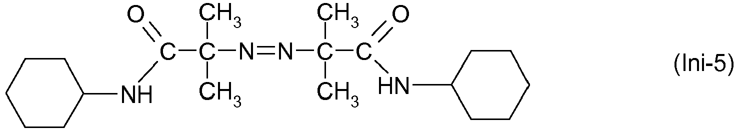

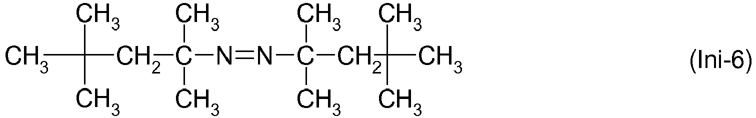

9. Verfahren nach Anspruch 1 oder 2, wobei die Polymerisation unter Einsatz von t-Butylhydroperoxid, Cumolhydroperoxid, Pinanhydroperoxid, p-Menthanhydroperoxid, Dibenzoylperoxid, 2,4-Dichlorbenzoylperoxid, 2,5-Dimethylhexan-2,5-di-t.butylperoxid, Bis-(t-butylperoxyisopropyl) benzol, t-Butylcumylperoxid, Di-t-butylperoxid, Dicumylperoxid, t-Butylperbenzoat, t-Butylperacetat, 2,5-Dimethylhexan-2,5-diperbenzoat oder t-Butyl-per-3,5,5-trimethylhexanoat durchgeführt wird.

10. Verfahren nach Anspruch 1 oder 2, wobei als organische Lösungsmittel Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on, Methylethylketon oder Methyl-tert.butylether eingesetzt wird.

11. Nitrilkautschuke, die optional hydriert sind und durch das Verfahren nach Anspruch 1 oder 2 erhältlich sind, und die vollkommen emulgator- und salzfrei sind.

12. Vulkanisierbare Mischungen enthaltend den optional hydrierten Nitrilkautschuk nach Anspruch 11, mindestens einen Vernetzer, optional mindestens einen Füllstoff und optional ein oder mehrere weitere Kautschukadditive.

13. Verfahren zur Herstellung von Vulkanisaten, **dadurch gekennzeichnet, dass** die vulkanisierbare Mischung nach Anspruch 12 einer Vernetzung unterzogen wird, bevorzugt durch Zusatz mindestens eines Vernetzers oder durch photochemische Aktivierung.

14. Vulkanisate, bevorzugt Formteile, erhältlich durch das Verfahren nach Anspruch 13.

## Claims

1. Process for preparing nitrile rubbers by free-radical polymerization of at least one conjugated diene, at least one α,β-unsaturated nitrile and optionally one or more further copolymerizable monomers in the presence of an initiator, at least one organic solvent and at least one molecular weight modifier, **characterized in that** the molecular weight modifier is selected from the group consisting of
(i) mercaptans, which contain at least one SH group,
(ii) mercapto alcohols, which contain at least one SH group and at least one OH group,
(iii) mercaptocarboxylic acids, which contain at least one SH group and at least one carboxyl group, and mercaptocarboxylic esters, which contain at least one SH group and at least one carboxylic ester group,
(iv) thiocarboxylic acids,
(v) disulphides, polysulphides,
(vi) thiourea,
(vii) allyl compounds,
(viii) aldehydes,
(ix) aliphatic halohydrocarbons, araliphatic halohydrocarbons,
(x) saccharin and
(xi) any mixtures of two or more of the molecular weight modifiers (i) - (x),
and **in that** the organic solvent is a polar solvent which has a Hildebrand solubility parameter δ (δ= ((ΔHᵥ-RT)/Vₘ)^{½} [(MPa)^{½}]) (Vₘ = molar volume; ΔHᵥ = enthalpy of vaporization; R = ideal gas constant)) in a range between 15.5 and 26 (MPa)^{½}.

2. Process according to Claim 1, the free-radical polymerization being followed by a hydrogenation.

3. Process according to Claim 1 or 2, the molecular weight modifier being selected from the group consisting of
(i) alkyl mercaptans, preferably C₁-C₁₆ alkyl mercaptans, more particularly methyl mercaptan, ethyl mercaptan, n-butyl mercaptan, n-hexyl mercaptan, n-octyl mercaptan, n-dodecyl mercaptan and tert-dodecyl mercaptans,
(ii) aliphatic mercapto alcohols and cycloaliphatic mercapto alcohols, preferably 2-mercapto-1-ethanol, 3-mercapto-1-propanol, 3-mercaptopropane-1,2-diol, 4-mercapto-1-butanol and 2-mercaptocyclohexanol,
(iii) mercaptoacetic acid, 3-mercaptopropionic acid, mercaptobutanedioic acid, cysteine, N-acetylcysteine and alkyl thioglycolates, more particularly ethylhexyl thioglycolate,
(iv) thioacetic acid,
(v) xanthogen disulphides, preferably diisopropylxanthogen disulphide,
(vi) thiourea
(vii) allyl alcohol, allyl chloride,
(viii) crotonaldehyde,
(ix) chloroform, carbon tetrachloride, iodoform, benzyl bromide and
(x) saccharin,
(xi) any desired mixtures of two or more of the molecular weight modifiers (i) - (x).

4. Process according to Claim 1 or 2, use being made as molecular weight modifiers of a mixture of 2,2,4,6,6-pentamethylheptane-4-thiol, 2,4,4,6,6-pentamethylheptane-2-thiol, 2,3,4,6,6-pentamethylheptane-2-thiol and 2,3,4,6,6-pentamethylheptane-3-thiol.

5. Process according to Claim 1 or 2, use being made of 1 to 5000 mol%, preferably 5 to 2000 mol%, of the molecular weight modifier per mole of the initiator.

6. Process according to Claim 1 or 2, the initiator being used in an amount in the range from 10⁻⁴ to 10⁻¹ mol/l, preferably in an amount of 10⁻³ to 10⁻² mol/l.

7. Process according to Claim 1 or 2, the polymerization being carried out in the presence of at least one peroxidic initiator or at least one azo initiator having a half-life of 10 hours or more than 10 hours in the organic solvent at a temperature of 70°C to 200°C, preferably 80°C to 175°C, more preferably 85°C to 160°C and more particularly 85°C to 150°C.

8. Process according to Claim 1 or 2, the polymerization being carried out in the presence of an azo initiator of the structural formulae (Ini-1) to (Ini-6)

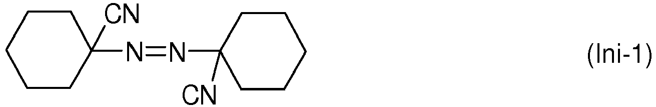

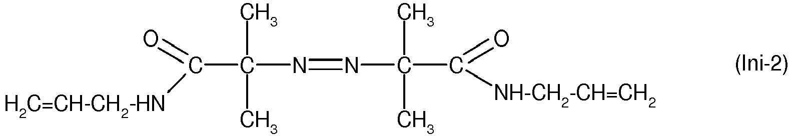

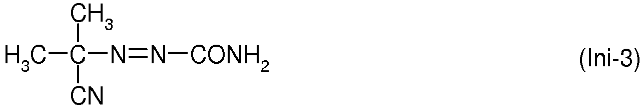

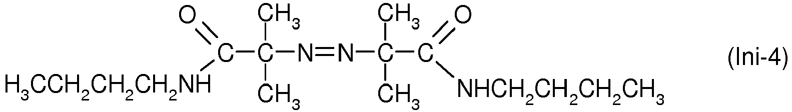

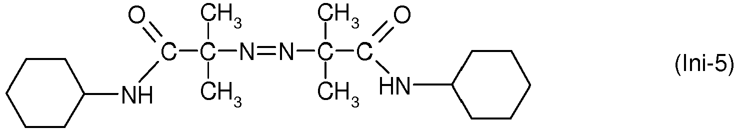

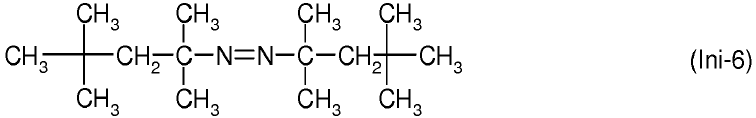

9. Process according to Claim 1 or 2, the polymerization being carried out using tert-butyl hydroperoxide, cumene hydroperoxide, pinane hydroperoxide, p-menthane hydroperoxide, dibenzoyl peroxide, 2,4-dichlorobenzoyl peroxide, 2,5-dimethylhexane-2,5-di-tert-butyl peroxide, bis(tert-butylperoxyisopropyl)benzene, tert-butyl cumyl peroxide, di-tert-butyl peroxide, dicumyl peroxide, tert-butyl perbenzoate, tert-butyl peracetate, 2,5-dimethylhexane 2,5-diperbenzoate or tert-butyl per-3,5,5-trimethylhexanoate.

10. Process according to Claim 1 or 2, where use is made as organic solvent of dimethylacetamide, monochlorobenzene, toluene, ethyl acetate, 1,4-dioxane, t-butanol, isobutyronitrile, 3-propanone, dimethyl carbonate, 4-methylbutan-2-one, methyl ethyl ketone or methyl tert-butyl ether.

11. Nitrile rubbers which are optionally hydrogenated and obtainable by the process according to Claim 1 or 2, and which are entirely emulsifier-free and salt-free.

12. Vulcanizable mixtures comprising the optionally hydrogenated nitrile rubber according to Claim 11, at least one crosslinker, optionally at least one filler and optionally one or more further rubber additives.

13. Process for producing vulcanizates, **characterized in that** the vulcanizable mixture according to Claim 12 is subjected to crosslinking, preferably by addition of at least one crosslinker or by photochemical activation.

14. Vulcanizates, preferably mouldings, obtainable by the process according to Claim 13.

## Revendications

1. Procédé de fabrication de caoutchoucs de nitrile par polymérisation radicalaire d'au moins un diène conjugué, d'au moins un nitrile α,β-insaturé et éventuellement d'un ou de plusieurs autres monomères copolymérisables en présence d'un initiateur, d'au moins un solvant organique et d'au moins un régulateur du poids moléculaire, **caractérisé en ce que** le régulateur du poids moléculaire est choisi dans le groupe constitué par :
(i) les mercaptans, qui contiennent au moins un groupe SH,
(ii) les mercapto-alcools, qui contiennent au moins un groupe SH et au moins un groupe OH,
(iii) les acides mercaptocarboxyliques, qui contiennent au moins un groupe SH et au moins un groupe carboxyle, et les esters d'acides mercaptocarboxyliques, qui contiennent au moins un groupe SH et au moins un groupe ester d'acide carboxylique,
(iv) les acides thiocarboxyliques,
(v) les disulfures, les polysulfures,
(vi) la thiourée,
(vii) les composés d'allyle,
(viii) les aldéhydes,
(ix) les hydrocarbures halogénés aliphatiques, les hydrocarbures halogénés araliphatiques,
(x) la saccharine et
(xi) les mélanges quelconques de deux ou plus des régulateurs du poids moléculaire (i) à (x),
et **en ce que** le solvant organique est un solvant polaire, qui présente un paramètre de solubilité de Hildebrand δ (δ = ((ΔHᵥRT)/Vₘ)^{1/2} [(MPa)^{1/2}]) (Vₘ = volume molaire ; ΔHᵥ = enthalpie de vaporisation ; R = constante de gaz idéale)) dans une plage comprise entre 15, 5 et 26 (MPa)^{1/2}.

2. Procédé selon la revendication 1, dans lequel la polymérisation radicalaire est suivie par une hydrogénation.

3. Procédé selon la revendication 1 ou 2, dans lequel le régulateur du poids moléculaire est choisi dans le groupe constitué par :
(i) les alkylmercaptans, de préférence les alkylmercaptans en C₁-C₁₆, notamment le méthylmercaptan, l'éthylmercaptan, le n-butylmercaptan, le n-hexylmercaptan, le n-octylmercaptan, le n-dodécylmercaptan et le tert.-dodécylmercaptan,
(ii) les mercapto-alcools aliphatiques et les mercapto-alcools cycloaliphatiques, de préférence le 2-mercapto-1-éthanol, le 3-mercapto-1-propanol, le 3-mercaptopropane-1,2-diol, le 4-mercapto-1-butanol et le 2-mercaptocyclohexanol,
(iii) l'acide mercaptoacétique, l'acide 3-mercaptopropionique, l'acide mercaptobutanedioïque, la cystéine, la N-acétylcystéine et les thioglycolates d'alkyle, notamment le thioglycolate d'éthylhexyle,
(iv) l'acide thioacétique,
(v) les disulfures de xanthogène, de préférence le disulfure de diisopropylxanthogène,
(vi) la thiourée,
(vii) l'alcool allylique, le chlorure allylique,
(viii) le crotonaldéhyde,
(ix) le chloroforme, le tétrachlorocarbone, l'iodoforme, le bromure de benzyle, et
(x) la saccharine,
(xi) les mélanges quelconques de deux ou plus des régulateurs du poids moléculaire (i) à (x).

4. Procédé selon la revendication 1 ou 2, dans lequel un mélange de 2,2,4,6,6-pentaméthylheptanethiol-4, 2,4,4,6,6-pentaméthylheptanethiol-2, 2,3,4,6,6-pentaméthylheptanethiol-2 et 2,3,4,6,6-pentaméthylheptanethiol-3 est utilisé en tant que régulateur du poids moléculaire.

5. Procédé selon la revendication 1 ou 2, dans lequel 1 à 5 000 % en moles, de préférence 5 à 2 000 % en moles du régulateur du poids moléculaire, est utilisé par rapport à 1 mole de l'initiateur.

6. Procédé selon la revendication 1 ou 2, dans lequel l'initiateur est utilisé en une quantité dans la plage allant de 10⁻⁴ à 10⁻¹ mol/l, de préférence en une quantité de 10⁻³ à 10⁻² mol/l.

7. Procédé selon la revendication 1 ou 2, dans lequel la polymérisation est réalisée en présence d'au moins un initiateur peroxydique ou d'au moins un initiateur azo, qui présente à une température de 70 °C à 200 °C, de préférence de 80 °C à 175 °C, de manière particulièrement préférée de 85 °C à 160 °C et notamment de 85 °C à 150 °C, dans le solvant organique une demi-vie de 10 heures ou plus de 10 heures.

8. Procédé selon la revendication 1 ou 2, dans lequel la polymérisation est réalisée en présence d'un initiateur azo des formules structurales (Ini-1) à (Ini-6)

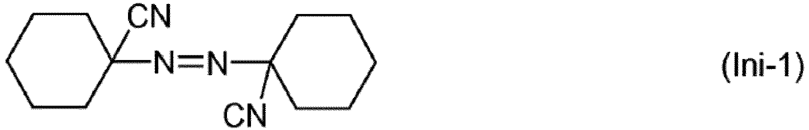

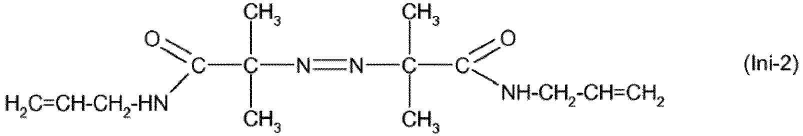

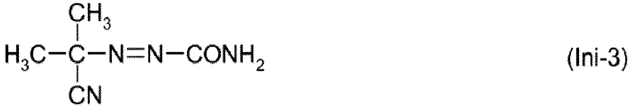

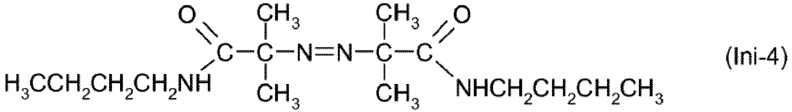

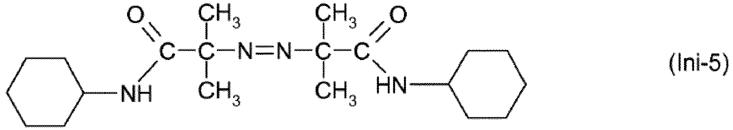

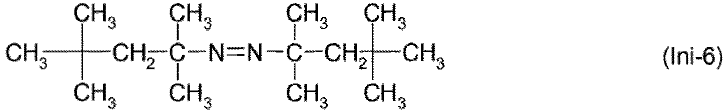

9. Procédé selon la revendication 1 ou 2, dans lequel la polymérisation est réalisée en utilisant de l'hydroperoxyde de t-butyle, de l'hydroperoxyde de cumène, de l'hydroperoxyde de pinane, de l'hydroperoxyde de p-menthane, du peroxyde de dibenzoyle, du peroxyde de 2,4-dichlorobenzoyle, du peroxyde de 2,5-diméthylhexane-2,5-di-t.-butyle, du bis-(t-butylperoxyisopropyl)benzène, du peroxyde de t-butylcumyle, du peroxyde de di-t-butyle, du peroxyde de dicumyle, du perbenzoate de t-butyle, du peracétate de t-butyle, du 2,5-diperbenzoate de 2,5-diméthylhexane ou du per-3,5,5-triméthylhexanoate de t-butyle.

10. Procédé selon la revendication 1 ou 2, dans lequel du diméthylacétamide, du monochlorobenzène, du toluène, de l'acétate d'éthyle, du 1,4-dioxane, du t-butanol, de l'isobutyronitrile, de la 3-propanone, du carbonate de diméthyle, de la 4-méthylbutan-2-one, de la méthyléthylcétone ou de l'éther de méthyle et de tert.-butyle est utilisé en tant que solvant organique.

11. Caoutchoucs de nitrile, qui sont éventuellement hydrogénés et qui peuvent être obtenus par le procédé selon la revendication 1 ou 2, et qui sont entièrement exempts d'émulsifiants et de sels.

12. Mélanges vulcanisables contenant le caoutchouc de nitrile éventuellement hydrogéné selon la revendication 11, au moins un agent de réticulation, éventuellement au moins une charge et éventuellement un ou plusieurs additifs de caoutchouc.

13. Procédé de fabrication de vulcanisats, **caractérisé en ce que** le mélange vulcanisable selon la revendication 12 est soumis à une réticulation, de préférence par ajout d'au moins un agent de réticulation ou par activation photochimique.

14. Vulcanisats, de préférence pièces moulées, pouvant être obtenus par le procédé selon la revendication 13.
